# EUROPEAN PATENT SPECIFICATION

(11) **EP 2 598 806 B1**
(45) Date of publication and mention of the grant of the patent: **28.01.2015**
(21) Application number: 11749875.8
(22) Date of filing: 01.08.2011
(51) Int. Cl.: F24D 19/10

(54) **CENTRAL HEATING SYSTEM**
ZENTRALHEIZUNGSSYSTEM
SYSTÈME DE CHAUFFAGE CENTRAL

(30) Priority: 30.07.2010 GB 201012762
(43) Date of publication of application: 05.06.2013
(73) Proprietor: Hall, Gregory, Alcester, Warwickshire B49 6JW (GB)
(72) Inventor: Hall, Gregory, Alcester, Warwickshire B49 6JW (GB)
(74) Representative: Hartwell, Ian Peter
(86) International application number: PCT/GB2011/001158
(87) International publication number: WO 2012/013941

(56) References cited:
- EP-A1- 0 128 808
- EP-A2- 1 564 616
- GB-A- 2 062 216

## Description

The present invention relates to heating systems and in particular, but not exclusively, to domestic central heating systems.

Domestic central heating systems as known, e.g. from EP1564616, typically include a hot water boiler connected by pipe to a series of radiators which radiate heat into the surrounding environment. Each radiator heats a distinct zone and often has a valve to control the rate of heat transfer.

Document EP1564616 discloses the preamble of claim 1.

Modern central heating systems are usually fitted with highly efficient condensing boilers. These boilers require a temperature drop across the outlet and the return. Present central heating systems are not specifically designed to provide this temperature drop and thus the majority of systems operate at an temperature drop of less than 10%.

Condensing boilers are most efficient at a lower outlet temperature (approximately 63 degrees centigrade) than conventional boilers which operate at approximately 84 degrees centigrade. The lower temperatures associated with condensing boilers make it difficult to correctly balance the radiators in the system as most require the full flow rate achievable by the boiler in order to get hot. This compromise usually leads to the raising of the boiler outlet temperature and thus reducing the efficiency of the boiler.

The reason for this increased outlet temperature and thus reduced temperature drop is the difficulty in achieving the required temperature drop across each radiator whilst maintaining the heating effectiveness of the radiator. The rate of heat transfer is exponential with temperature difference, that is to say the temperature of the radiator against ambient room temperature.

If the flow rate through a radiator is too high the radiator temperature will be hot and the temperature drop across the outlet and return of the boiler will be low as the fluid has little time to cool. Although the heat output from each radiator is high, the efficiency of the boiler is low.

If the flow rate is low, the temperature of the radiator is then low and the heat transfer is also low meaning the room will not heat sufficiently quickly unless the radiator is very large. The heat output from the radiator will be low but the efficiency of the boiler is high.

It is an object of the current invention to at least mitigate some of the above problems.

Accordingly, there is provided a method of controlling a central heating system including the steps of:
providing a heating device for generating hot water, a water pump and at least one radiator fluidicly connected to the heating device and pump, each radiator having an inlet valve and an outlet temperature sensor,
the method further including the steps of
operating the pump to pump hot water into the radiator, closing the radiator inlet valve, and opening the radiator inlet valve when the temperature sensed by the outlet temperature sensor drops to a predetermined value.

Advantageously the invention provides the maximum boiler efficiency available through the use of a cooling cycle to allow the radiator temperature to drop to the predetermined temperature. This means that the radiator achieves a high temperature from a high flow rate and then the flow rate stops whilst it cools to the required temperature drop. The radiator is then flushed again and this process repeats in cycles.

Preferably, the system has two or more radiators fluidicly connected in series, each radiator having a bypass flow path wherein the method includes the step of selectively pumping hot water past one or more radiators to a predetermined radiator.

The system has a major advantage over conventional parallel systems in that by delivering series flow of heating fluid it is ensured that the full flow is passed through every radiator regardless of the systems configuration. Radiators therefore require no balancing. Furthermore, there are no detrimental effects associated with valve operation altering the system balance.

The system is therefore capable of efficiently outputting increased heat from a radiator than in a current parallel setup. This means that it is possible to reduce the size of the radiator in order to fulfil the rooms heating requirement. This is advantageous both in reducing the cost of the radiators and also in reducing the packaging space required to install the radiators within a room.

Further advantageously, this method transfers less heat overall than a steady state high flow rate system but with far greater boiler efficiency. Furthermore, because no balancing is required the system will have a greater average heat output across the whole system whilst maintaining the efficiency. The method transfers increased heat at a faster rate than a steady state low flow system whilst achieving the same efficiency.

This is achieved by virtue of Newton's Law of cooling which states that the time taken to cool a set temperature varies with temperature differential. By maximising the temperature drop at each radiator, the efficiency of the boiler is increased.

Advantageously, the method allows a high flow rate to be achieved at every radiator. This in turn allows maximum efficiency to be achieved out of the system.

The invention will now be described, with reference to the following drawings, in which:
Figure 1 is a schematic view of a system implementing the method according to the present invention; and
Figure 2 is a flow diagram setting out the steps of the method of the present invention.

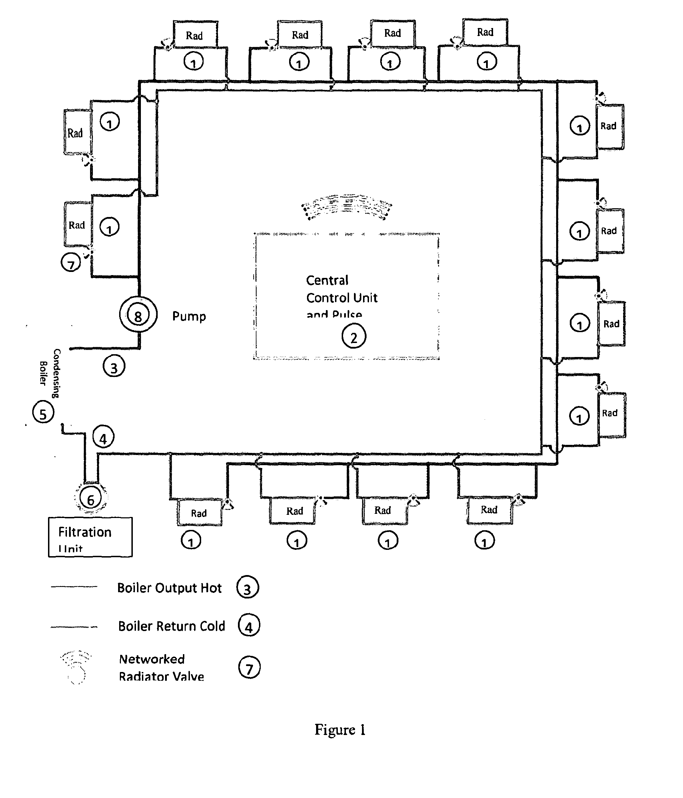

Referring to Figure 1 a plurality of networked radiators 1 are connected in series to a pump 8 and heating device in the form of a condensing boiler 5 by a boiler output line 3 and a boiler return line 4. The boiler return line 4 has a filtration unit 6 for filtering the water. Each radiator 1 has an inlet valve in the form of a network control valve 7. The valves 7, pump 8 and boiler 5 are controlled by the central controller 2.

The current method cycles through the radiators 1 to ensure that heating is delivered throughout the whole building. This method can be used to ensure the maximum efficiency available in the complete system and across the boiler. The cycles also enable the central controller 2 to channel the correct amount of flow to each and every radiator regardless of system design. This method is well suited to Pumps 8 with remote variable control flow rates.

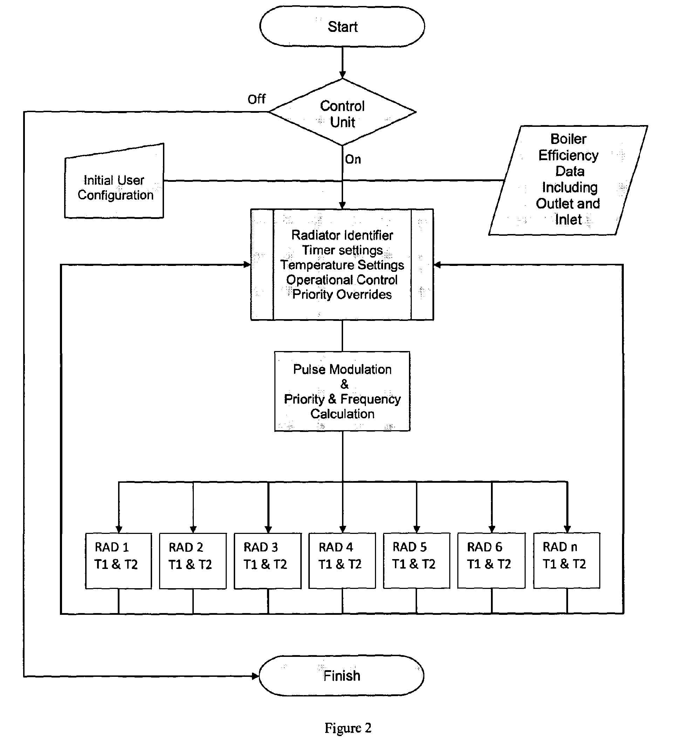

Referring to Figure 2, in use the controller 2 operates the following sequence of events. In the sequence below the heat exchange device is assumed to be a radiator but this method is also be applicable to other heat exchange devices.

With all valves 7 closed, controller 2 sends a signal to the valve 7a of a first radiator 1a to open in order to ensure series circuit flow. The controller 3 then sends a signal to the heating device to heat the heating fluid. The controller 2 sends a signal to the pump 8 to begin circulating the heating fluid.

The controller 2 processes input data from the radiator control valves 7 concerning the individual ambient room temperatures. The radiator control valve 7 also exports data to the controller 2 concerning the radiator fluid outlet temperature. The controller 2 processes the data and calculates the required radiator valve 7 opening sequence based upon the user inputs of timings, radiator priority and required temperature. The controller then calculates the temperature drop for each radiator 1 in order to maximise the heating device's efficiency and the operator's requirements.

The controller 2 controls the radiator control valves 7 to open each valve in a predetermined series. Each valve 7 remains open until a relatively steady temperature is recorded at the outlet of the radiator, at which point the valve 7 is closed. The radiator then begins to cool. This outlet temperature may also be determined to be within a percentage of the input temperature if it proves more efficient. A signal is then returned to the controller signifying the completion of the pulse of that particular radiator.

The controller 2 then signals the next radiator in the sequence to open the control valve 7. The next sequenced radiator then begins its heating cycle. This is repeated throughout the complete predetermined sequence of heat exchange devices. At the end of the cooling cycle each radiator control valve 7 signals the controller identifying a successful cooling cycle and a readiness to receive the next pulse. The controller calculates data received from the radiator control valves 7 to optimise the timing cycle of the system. The radiator cooling times are variable and the unit controller calculates the new sequences as the cooling periods increase. The cooling periods increase due to the decreased temperature gradient as the room heats up. The controller also receives data concerning the heating device's optimised efficient operation settings. The controller continually calculates cooling times and temperatures across the system in order to achieve the optimum system requirements. If required it may also vary fluid flow through a variable pump. A resistive filtration unit 6 is implemented intermittently by the controller by diverting the flow through the filter.

This system allows complete control over a building's heating requirements for both zone control and temperature requirements. The method of the present invention overcomes a major disadvantage of zone control and that is through the variation of zone fluid flow against the requirements of balancing for the complete system. The method of the present invention requires no balancing and thus has no disadvantages when using zone control heating methods. The heating requirements are continually recalculated so any number of zone heating variations will not affect the efficiency. This coupled with an estimated efficiency increase of up to 10% from a condensing boiler operating under optimised conditions provides a substantial advantage.

## Claims

1. A method of controlling a central heating system including the steps of:
providing a heating device (5) for generating hot water, a water pump (8) and at least one radiator (1) fluidicly connected to the heating device and pump, each radiator having an inlet valve (7) and an outlet temperature sensor,
the method further including the steps of operating the pump to pump hot water into the radiator (1), closing the radiator inlet valve (7), and **characterized in that** the method further opening the radiator inlet valve when the temperature sensed by the outlet temperature sensor drops to a predetermined value.

2. The method according to claim 1 wherein the system has two or more radiators (1) fluidicly connected in series, each radiator having a bypass flow path, wherein the method includes the step of selectively pumping hot water past one or more radiators to a predetermined radiator.

3. The method of claim 1 or 2 wherein the method includes the step of monitoring the temperature of a room in which the radiator or radiators (1) resides.

4. The method of claim 1, 2 or 3 wherein the method includes the step of monitoring an outlet temperature of the radiator or radiators (1).

5. The method of claim 2 wherein the method includes the step of establishing a radiator priority for establishing a hierarchy of radiators (1) for the receipt of heating fluid.

6. The method of any preceding claim wherein the method includes the step of establishing a required temperature in the room in which the radiator or radiators (1) reside.

## Patentansprüche

1. Verfahren zur Steuerung eines Zentralheizungssystems, das folgende Schritte umfasst:
Bereitstellen einer Heizvorrichtung (5) zum Erzeugen von heißem Wasser, einer Wasserpumpe (8) und mindestens eines Heizkörpers (1), der strömungstechnisch mit der Heizvorrichtung und der Pumpe verbunden ist, wobei jeder Heizkörper ein Einlassventil (7) und einen Auslasstemperatursensor umfasst,
wobei das Verfahren ferner folgende Schritte umfasst:
Betreiben der Pumpe, um heißes Wasser in den Heizkörper (1) zu pumpen, **dadurch gekennzeichnet, dass** das Verfahren ferner folgende Schritte umfasst: Schließen des Heizkörpereinlassventils (7) und
Öffnen des Heizkörpereinlassventils, wenn die Temperatur, die von dem Auslasstemperatursensor erfasst wird, auf einen vorbestimmten Wert sinkt.

2. Verfahren nach Anspruch 1, wobei das System zwei oder mehrere Heizkörper (1) aufweist, die strömungstechnisch in Reihe verbunden sind, wobei jeder Heizkörper einen Umgehungsströmungspfad aufweist, wobei das Verfahren folgenden Schritt umfasst: selektives Pumpen von heißem Wasser zu einem vorgegebenen Heizkörper unter Umgehung eines oder mehrerer Heizkörper.

3. Verfahren nach Anspruch 1 oder 2, wobei das Verfahren den Schritt der Überwachung der Temperatur eines Raumes umfasst, in dem sich der Heizkörper bzw. die Heizkörper (1) befinden.

4. Verfahren nach Anspruch 1, 2 oder 3, wobei das Verfahren den Schritt der Überwachung einer Auslasstemperatur des Heizkörpers bzw. der Heizkörper (1) umfasst.

5. Verfahren nach Anspruch 2, wobei das Verfahren den Schritt des Festlegens einer Heizkörperpriorität umfasst, um eine Hierarchie von Heizkörpern (1) für den Erhalt von Heizfluid festzulegen.

6. Verfahren nach einem der vorhergehenden Ansprüche, wobei das Verfahren den Schritt des Festlegens einer erforderlichen Temperatur in dem Raum umfasst, in dem sich der Heizkörper bzw. die Heizkörper (1) befinden.

## Revendications

1. Procédé de commande d'un système de chauffage central, incluant les étapes consistant à :
mettre à disposition un dispositif de chauffage (5) pour générer de l'eau chaude, une pompe à eau (8) et au moins un radiateur (1) raccordé fluidiquement au dispositif de chauffage et à la pompe, chaque radiateur possédant une valve d'admission (7) et un capteur de température de sortie,
le procédé incluant en outre les étapes consistant à :
faire fonctionner la pompe pour que celle-ci amène par pompage de l'eau chaude dans le radiateur (1), **caractérisé en ce que** le procédé inclut en outre les étapes consistant à fermer la valve d'admission de radiateur (7) et à ouvrir la valve d'admission de radiateur lorsque la température détectée par le capteur de température de sortie descend à une valeur prédéterminée.

2. Procédé selon la revendication 1, le système possédant deux ou plusieurs radiateurs (1) fluidiquement raccordés en série, chaque radiateur possédant un parcours de flux de dérivation, cas dans lequel le procédé inclut l'étape consistant à pomper sélectivement de l'eau chaude, qui contourne un ou plusieurs radiateurs, jusqu'à un radiateur prédéterminé.

3. Procédé selon la revendication 1 ou 2, le procédé incluant l'étape consistant à surveiller la température d'une pièce dans laquelle le radiateur ou les radiateurs (1) sont implantés.

4. Procédé selon la revendication 1, 2 ou 3, le procédé incluant l'étape consistant à surveiller une température de sortie du radiateur ou des radiateurs (1).

5. Procédé selon la revendication 2, le procédé incluant l'étape consistant à établir une priorité de radiateur destinée à établir une hiérarchie de radiateurs (1) pour la réception du fluide de chauffage.

6. Procédé selon l'une quelconque des revendications précédentes, le procédé incluant l'étape consistant à établir une température requise dans la pièce dans laquelle le radiateur ou les radiateurs (1) sont implantés.
